# EUROPEAN PATENT APPLICATION

(11) **EP 2 529 831 A1**
(43) Date of publication of application: **05.12.2012**
(21) Application number: 11737227.6
(22) Date of filing: 27.01.2011
(51) Int. Cl.: B01J 20/10, B01D 15/00, F01M 11/03

(54) **MATERIAL FOR TRAPPING SUBSTANCE TO BE TRAPPED, FILTER FOR TRAPPING SUBSTANCE TO BE TRAPPED, CONTAINER FOR LIQUID ORGANIC COMPOUND, AND ENGINE OIL**

(30) Priority: 28.01.2010 JP 2010016554
(71) Applicant: Kabushiki Kaisha Toyota Chuo Kenkyusho, Nagakute-shi, Aichi 480-1192 (JP); Toyota Jidosha Kabushiki Kaisha, Toyota-shi, Aichi 471-8571 (JP)
(72) Inventor: OHMIYA, Yasuhiro, Aichi 4801192 (JP); TOHYAMA, Mamoru, Aichi 4801192 (JP); MORITANI, Hiroshi, Aichi 4801192 (JP); TATSUDA, Narihito, Aichi 4801192 (JP); YANO, Kazuhisa, Aichi 4801192 (JP); HARADA, Kenichi, Toyota-shi Aichi 471-8571 (JP); FUKUTOMI, Ippei, Toyota-shi Aichi 471-8571 (JP); MURAKAMI, Motoichi, Toyota-shi Aichi 471-8571 (JP); INAMI, Norio, Toyota-shi Aichi 471-8571 (JP); KOIKE, Ryuji, Toyota-shi Aichi 471-8571 (JP)
(74) Representative: Intès, Didier Gérard André
(86) International application number: PCT/JP2011/052191
(87) International publication number: WO 2011/093519

(57) **Abstract**

A material for trapping a target substance, which is capable of selectively trapping a target substance such as a sludge or a sludge precursor contained in a liquid organic compound such as an engine oil or in a gas such as a blow-by gas (combustion gas). A material for trapping a target substance, which traps a target substance contained in a liquid organic compound or a gas, the material comprising a mesoporous inorganic material having a plurality of pores.

## Description

### TECHNICAL FIELD

The present invention relates to a material for trapping a target substance which is used for trapping a target substance contained within a liquid organic compound or a gas, and also relates to a filter for trapping a target substance, a container for a liquid organic compound, and an engine oil.

### BACKGROUND ART

One example of the degradation components of oils such as the engine oils that function as lubricating oils within internal combustion engines is sludge. Sludge is produced, for example, when initial degradation products of an engine oil (sludge precursors) undergo polymerization.

An example of a technique for removing this type of sludge from an oil is disclosed in Patent Document 1, which discloses a filter material for an oil filter for an internal combustion engine, wherein the filter material is prepared by mixing main fibers such as cellulose fibers that form the framework of the filter material with fine fibers such as fine cellulose fibers having a fiber diameter that is 1/10th or less of that of the main fibers, and at least a portion of the main fibers or the fine fibers are cationic fibers having a positive charge on the fiber surface. In this filter, because at least a portion of the component fibers are cationic fibers having a positive charge on the fiber surface, carbon sludge within the oil, which is anionic, is attracted to and electrically adsorbed to the surface of the cationic fibers.

Patent Document 2 discloses a filter for cleaning oil that is formed using an electret material, which is composed of fibers prepared by imparting a charge to a resin such as a polypropylene. This filter utilizes the electrostatic property of carbon sludge that exists within the oil, and attracts and traps the carbon sludge by Coulomb force.

Patent Document 3 discloses a method of removing sludge from a lubricating oil, the method comprising incorporating dispersant functional groups such as polyethyleneamine on an immobilizing substrate such as activated carbon, and bringing the lubricating oil into contact with the substrate for a period that is sufficient to enable at least a portion of the sludge to be removed from the lubricating oil onto the substrate.

Patent Document 4 discloses a method of reducing the amount of sludge or varnish precursors in a lubricating oil, the method comprising bringing the lubricating oil containing the sludge or varnish precursors into contact with an oil-insoluble, oil-wettable compound having an antioxidant functional group and/or a dispersant functional group, wherein the compound is capable of forming a complex with the sludge or varnish precursors, and is in the form of a plurality of discrete solid particles which are not incorporated within a substrate, thereby immobilizing at least a portion of the sludge or varnish precursors on the particles.

### PRIOR ART

### PATENT DOCUMENTS

Patent Document 1: JP 08-000930 A
Patent Document 2: JP 07-060027 A
Patent Document 3: JP 03-152194 A
Patent Document 4: JP 08-508773 A

### DISCLOSURE OF INVENTION

### PROBLEMS TO BE SOLVED BY THE INVENTION

In the methods disclosed in Patent Documents I and 2, even though sludge is able to be adsorbed, trapping the sludge precursors that exist prior to the formation of the sludge is difficult.

In methods such as those disclosed in Patent Documents 3 and 4, because materials such as activated carbon have comparatively large central pore diameters, in those cases where an oil such as an engine oil contains active ingredients such as additives, there is a possibility that a large amount of these active ingredients may also be trapped together with the sludge, resulting in a deterioration in the performance of the oil.

Further, it is desirable to be able to selectively trap substances to be trapped that are contained not only within engine oils, but also within liquid organic compounds or gases such as blow-by gases (combustion gases).

The present invention provides a material for trapping a target substance that is capable of selectively trapping a target substance such as a sludge or a sludge precursor contained within a liquid organic compound such as an engine oil or within a gas, and also provides a filter for trapping a target substance, a container for a liquid organic compound, and an engine oil.

### MEANS FOR SOLVING THE PROBLEMS

The present invention provides a material for trapping a target substance, which traps a target substance contained within a liquid organic compound or a gas, the material comprising a mesoporous inorganic material having a plurality of pores.

Further, in the above material for trapping a target substance, the central pore diameter of the mesoporous inorganic material is preferably within a range from approximately 1 to approximately 20 nm.

Furthermore, in the above material for trapping a target substance, the central pore diameter of the mesoporous inorganic material is preferably within a range from approximately 1.5 to approximately 11 nm.

Further, in the above material for trapping a target substance, the mesoporous inorganic material is preferably a silica-based mesoporous inorganic material.

Furthermore, in the above material for trapping a target substance, the silica-based mesoporous inorganic material is preferably a spherical silica-based mesoporous inorganic material having an average particle size of not more than approximately 1 µm.

Further, in the above material for trapping a target substance, the mesoporous inorganic material is preferably a material that has been chemically modified with an amino group or a hydrochloride via a hydrocarbon group.

Moreover, the present invention also provides a filter for trapping a target substance, which traps a target substance contained within a liquid organic compound or a gas, the filter including a filter material comprising a mesoporous inorganic material having a plurality of pores.

Further, in the above filter for trapping a target substance, the central pore diameter of the mesoporous inorganic material is preferably within a range from approximately 1 to approximately 20 nm.

Furthermore, in the above filter for trapping a target substance, the central pore diameter of the mesoporous inorganic material is preferably within a range from approximately 1.5 to approximately 11 nm.

Further, in the above filter for trapping a target substance, the surface of the filter material preferably comprises particles of the mesoporous inorganic material.

Further, in the above filter for trapping a target substance, the filter material is preferably a paper body.

Further, in the above filter for trapping a target substance, the filter material preferably comprises a molded member having a honeycomb structure that increases the contact with the liquid organic compound in order to enhance the trapping and removal of the target substance, wherein at least the surfaces of the molded member that make contact with the liquid organic compound comprise the mesoporous inorganic material.

Moreover, the present invention also provides a filter for trapping a target substance, which traps a target substance contained within a liquid organic compound or a gas, the filter comprising a molded body of a mesoporous inorganic material having a plurality of pores.

Further, in the above filter for trapping a target substance, the mesoporous inorganic material is preferably amorphous, and preferably has an average particle size within a range from approximately 0.2 to approximately 100 µm.

Further, in the above filter for trapping a target substance, the mesoporous inorganic material is preferably a material that has been chemically modified with an amino group or a hydrochloride via a hydrocarbon group.

Moreover, the present invention also provides a container for a liquid organic compound comprising a containment unit that contains the liquid organic compound, wherein at least a portion of the inner surface of the containment unit comprises a mesoporous inorganic material having a plurality of pores.

Further, in the above container for a liquid organic compound, the mesoporous inorganic material is preferably a material that has been chemically modified with an amino group or a hydrochloride via a hydrocarbon group.

Moreover, the present invention also provides an engine oil, comprising a spherical mesoporous inorganic material having a plurality of pores and an average particle size of not more than approximately 1 µm dispersed therein.

Further, in the above engine oil, the mesoporous inorganic material is preferably a material that has been chemically modified with an amino group or a hydrochloride via a hydrocarbon group.

### ADVANTAGES OF THE INVENTION

In the present invention, by including a mesoporous inorganic material having a plurality of pores, a material for trapping a target substance that is capable of selectively trapping a target substance such as a sludge or a sludge precursor contained within a liquid organic compound such as an engine oil or within a gas such as a blow-by gas (combustion gas), a filter for trapping a target substance, a container for a liquid organic compound, and an engine oil can be provided.

### BRIEF DESCRIPTION OF THE DRAWINGS

FIG. 1 is a schematic structural view illustrating one example of an oil filter-integrated mesoporous oil filter according to an embodiment of the present invention.
FIG. 2 is a schematic structural view illustrating one example of a separation type mesoporous oil filter according to an embodiment of the present invention.
FIG. 3 is a schematic view illustrating one example of a mesoporous element according to an embodiment of the present invention, comprising a molded member having a honeycomb structure in which at least the surfaces of the molded member that make contact with an oil are provided with a mesoporous inorganic material.
FIG. 4 is a schematic view illustrating one example of an inner surface-coated oil pan according to an embodiment of the present invention.
FIG. 5 is a diagram illustrating the basic structure of a filtration apparatus used in examples of the present invention.
FIG. 6 is a diagram illustrating a difference spectrum for the infrared spectroscopic analyses (FT-IR) of a NOx-degraded oil relative to a new oil of prototype engine oil in an example of the present invention.
FIG. 7 is a diagram illustrating a comparison of the components (difference spectra relative to a new oil of prototype engine oil) of NOx-degraded oils following filtering, analyzed by infrared spectroscopic analysis (FT-IR) in an example of the present invention.
FIG. 8 is a diagram illustrating an SEM photograph of an amorphous mesoporous silica used in an example of the present invention.
FIG. 9 is a diagram illustrating an SEM photograph of a spherical mesoporous silica used in an example of the present invention.
FIG. 10 is a diagram illustrating a difference spectrum for the infrared spectroscopic analyses (FT-IR) of an NOx-degraded oil relative to a new oil of commercial engine oil in an example of the present invention.
FIG. 11 is a diagram illustrating an example of the FT-IR spectrum of nitrate esters within an NOx-degraded oil test sample in an example of the present invention.
FIG. 12 is a diagram illustrating an example of the FT-IR spectrum of sulfates within an NOx-degraded oil test sample in an example of the present invention.
FIG. 13 is a diagram illustrating the degradation product-trapping effect (for nitrate esters) in examples 3, 5, 6 and 7 of the present invention.
FIG. 14 is a diagram illustrating the degradation product-trapping effect (for sulfates) in examples 3, 5, 6 and 7 of the present invention.
FIG. 15 is a diagram illustrating a method of evaluating pressure loss for a filter material in an example of the present invention.
FIG. 16 is a diagram illustrating the pressure loss for filter materials in examples 3, 5, 6, 7 and 11 of the present invention.
FIG. 17 is a diagram illustrating the degradation product-trapping effect (for nitrate esters) in examples 2, 4, 8, 9 and 10 of the present invention.
FIG. 18 is a diagram illustrating the degradation product-trapping effect (for sulfates) in examples 2, 4, 8, 9 and 10 of the present invention.
FIG. 19 is diagram illustrating the effect of the porous body material in an example of the present invention.
FIG. 20 is a diagram illustrating the effect of chemical modification of a spherical mesoporous silica in an example of the present invention.
FIG. 21 is a diagram illustrating an oil degradation test apparatus in an example of the present invention.
FIG. 22 is a diagram illustrating difference spectra for oils following a degradation test relative to a new oil in an example of the present invention.
FIG. 23 is a diagram illustrating a system configuration in an example of the present invention.
FIG. 24 is a diagram illustrating a sludge precursor inhibitory effect provided by an amorphous mesoporous silica in an example of the present invention.
FIG. 25 is a diagram illustrating the degradation product-trapping effect of amorphous mesoporous silica paper bodies in examples 11 and 12 of the present invention.

### EMBODIMENTS FOR CARRYING OUT THE INVENTION

Embodiments of the present invention are described below. These embodiments are merely examples for illustrating the present invention, and the present invention is in no way limited by these embodiments.

A material for trapping a target substance within a liquid organic compound according to an embodiment of the present invention is a material which traps and removes a target substance contained within a liquid organic compound or gas, and comprises a mesoporous inorganic material having a plurality of pores. In their investigations of materials for selectively trapping substances to be trapped such as sludge and sludge precursors contained within liquid organic compounds such as engine oils or gases such as flow-by gases (combustion gases), the inventors of the present invention focused their attention on mesoporous inorganic materials having a plurality of pores, and discovered that these materials were capable of selectively trapping substances to be trapped such as sludge and sludge precursors.

Mesoporous inorganic materials are inorganic compounds that have a plurality of pores (mesopores for which the pore diameter is a meso-size of approximately 1 nm to approximately 50 nm). There are no particular limitations on the inorganic compound, and examples include inorganic compounds such as silica, alumina, zirconia, zeolite, titanium oxide, magnesium oxide, germanium oxide, zirconium oxide and zinc oxide, metal oxides, and activated carbon.

The central pore diameter of the mesoporous inorganic material is preferably within a range from approximately 1 to approximately 20 nm, and is more preferably within a range from approximately 1.5 to approximately 11 nm. In those cases where the central pore diameter is less than approximately 1 nm, there is an increased likelihood that the average size of the pores may be smaller than the size of the substances to be trapped which represent the target substances for trapping and removal, and therefore the trapping performance tends to deteriorate. Further, in those cases where the central pore diameter exceeds approximately 20 nm, the specific surface area tends to decrease, and the trapping properties tend to deteriorate. By adjusting the central pore diameter of the mesoporous inorganic material, specific substances to be trapped can be selected in accordance with their size.

The central pore diameter describes the pore diameter at the maximum peak of a curve (the pore diameter distribution curve) prepared by plotting the value obtained by differentiating the pore volume (V) by the pore diameter (D) (namely, dV/dD) against the pore diameter (D). The pore diameter distribution curve can be determined, for example, using the method described below. Namely, particles or the like of the mesoporous inorganic material are cooled to the temperature of liquid nitrogen (approximately -196°C), nitrogen gas is introduced into the particles, and the amount of nitrogen adsorption is determined by a constant volume method or a gravimetric method. The pressure of the introduced nitrogen gas is then gradually increased, and the amount of nitrogen gas adsorption at each equilibrium pressure is plotted, yielding an adsorption isotherm. Using this adsorption isotherm, a computational method such as the Cranston-Inklay method, the Pollimore-Heal method or the BJH method can be used to determine the pore diameter distribution curve.

In the material for trapping a target substance according to the present embodiment, the mesoporous inorganic material is preferably a material in which approximately 60% or more of the total pore volume is included within a range defined by central pore diameter ± 40% in the pore diameter distribution curve. A mesoporous inorganic material that satisfies this condition has a high degree of uniformity in the pore diameter. Here, the expression that "approximately 60% or more of the total pore volume is included within a range defined by central pore diameter ± 40% in the pore diameter distribution curve" means that, for example, if the central pore diameter is approximately 3.00 nm, then the volume of those pores within the range from approximately 3.00 nm ± 40%, namely the range from approximately 1.80 to approximately 4.20 nm, represents approximately 60% or more of the total pore volume.

In the material for trapping a target substance according to the present embodiment, although there are no particular limitations on the specific surface area of the mesoporous inorganic material, a value of approximately 700 m²/g or more is preferred. The specific surface area can be calculated from the adsorption isotherm as the BET specific surface area by using a BET isotherm adsorption equation.

In the material for trapping a target substance according to the present embodiment, the pore volume of the mesoporous inorganic material is preferably as large as possible, and is preferably approximately 0.7 cm³/g or more. The pore volume can be determined, for example, by dividing the weight of adsorbed nitrogen gas measured during the measurements for the pore diameter distribution curve by the nitrogen density (for example, see the commentary on gas adsorption methods entitled "Measurement of Specific Surface Area, Pore Distribution, and Particle Size Distribution" (Bunseki, July 2009) published by The Japan Society for Analytical Chemistry HP, http://www.jsac.or.jp/bunseki/pdf/bunseki2009/200907kaisetsu.pdf).

In the material for trapping a target substance according to the present embodiment, the mesoporous inorganic material preferably has an X-ray diffraction pattern that includes one or more peaks at diffraction angles equivalent to d values of approximately 1 nm or more. An X-ray diffraction peak means that a periodic structure having a d value equivalent to the peak angle exists within the sample. Accordingly, the existence of one or more peaks at diffraction angles equivalent to d values of approximately 1 nm or more means that pores are regularly arrayed at intervals of approximately 1 nm or more.

In the material for trapping a target substance according to the present embodiment, the pores of the mesoporous inorganic material are typically formed not only on the surface of the porous material, but also in the interior of the material. There are no particular limitations on the shape of the pores, and for example, the pores may penetrate through the material in tunnel-like structures, or may exist in a shape composed of interconnected spheres or polygonal cavities such as hexagonal columnar shapes.

The mesoporous inorganic material can be prepared, for example, in a water/alcohol mixed solvent, using the micellar structure of a surfactant as a mold, by polymerizing an alkoxide that functions as a silica source in the presence of an alkali or an acid to synthesize a silica. Further, the pore diameter distribution, the central pore diameter and the pore volume and the like of the mesoporous inorganic material can be determined by measuring the nitrogen adsorption isotherm at 77 K and then analyzing the results. The pore diameter distribution can be determined by analyzing the adsorption isotherm using a technique such as the BJH method. The central pore diameter can be determined as the pore diameter within the pore diameter distribution where the adsorption reaches a maximum value. Further, the pore volume can be determined by assuming that the density of the adsorption layer is the density of liquid nitrogen, and then determining the volume of liquid nitrogen that corresponds with the total adsorption at a relative vapor pressure P/P0=approximately 0.95.

The target substance, which is trapped in the pores of the mesoporous inorganic material, may be any substance contained within a liquid organic compound or gas that represents the target for trapping and removal, and there are no particular limitations, with examples including polar compounds and the like that exhibit polarity. Polar compounds are organic compounds molecules that have affinity with, and can be adsorbed within, the pores of the mesoporous inorganic material, and for example, provided the molecule has this type of affinity, the molecule may also include an inorganic compound structure within a portion of the molecule. Examples include the degradation products of oils such as engine oils that function as lubricating oils for internal combustion engines, including sludge, the initial degradation products of engine oil (sludge precursors), oxidation products, moisture, and added fuel components.

There are no particular limitations on the liquid organic compound that represents the treatment target, and any organic compound that is liquid at the trapping treatment temperature may be used. Examples of the liquid organic compound include paraffin-based and olefin-based hydrocarbon solutions, ester-based solutions, ether-based solutions, alcohol-based solutions, glycol-based solutions and silicone-based solutions, and among these, application of the present invention to non-polar hydrocarbon solutions such as paraffin-based solutions and olefin-based solutions is preferred. Specific examples include oils such as engine oils, hydraulic fluids for construction machinery and the like, and fuels.

An example of the gas that represents the treatment target is blow-by gas (combustion gas), which is the combustion gas blown out between the piston and the cylinder in an internal combustion engine.

The mesoporous inorganic material in the material for trapping a target substance according to the present embodiment may be subjected to functional group modification at least at the surface or within the pores. Examples of the functional group modification include methyl, propyl, hexyl, octadecyl, phenyl, allyl, vinyl, cyanopropyl, 3-bromopropyl, 3-chloropropyl, 2-(3,4-epoxycyclohexyl)ethyl, 3-glycidoxypropyl, 3-iodopropyl, 3-mercaptopnopyl, [2-(7-oxabicyclo[4,1,0]hept-3-yl)ethyl], propylurea, propylaniline, 3-phenylaminopropyl, acryloxypropyl, methacryloxypropyl, 2-phenylethyl, 3,3,3-trifluoropropyl, 3-[2-(2-aminoethylamino)ethylamino]propyl, [3-(2-aminoethylamino)propyl], 3-aminopropyl, 3-diethylaminopropyl, bis(3-methy)amino)propyl, N,N-dimethylaminopropyl, and hydrochlorides thereof. By subjecting at least the surface or pores of the mesoporous inorganic material to functional group modification, and selecting the functional group, the adsorptivity and selectivity and the like can be adjusted for the target substance. Of the above options, from the viewpoint of the trapping effect and the like for the target substance, the mesoporous inorganic material is preferably chemically modified with amino groups or a hydrochloride via a hydrocarbon group. Examples of this hydrocarbon group include linear and branched alkyl groups of 1 to 9 carbon atoms and aryl groups of 6 to 12 carbon atoms, and linear and branched alkyl groups of I to 9 carbon atoms are preferred.

The functional group modification of the mesoporous inorganic material may be performed, for example, by a copolymerization in which an alkoxide having a functional group is mixed with the alkoxide that functions as the silica source at the time of synthesis, or by a method such as a graft method in which an alkoxide having a covalently bonded functional group is reacted with the mesoporous inorganic material.

The mesoporous inorganic material in the material for trapping a target substance according to the present embodiment is preferably a silica-based mesoporous inorganic material. Further, the silica-based mesoporous inorganic material is preferably a spherical silica-based mesoporous inorganic material. The average particle size of the spherical silica-based mesoporous inorganic material is preferably not more than approximately 1 µm. Examples of materials that can be used as the spherical silica-based mesoporous inorganic material include monodispersed mesoporous silica spheres (MMSS, see JP 2005-089218 A) that have been synthesized to obtain spherical particle shapes of the sub-micron order.

In the spherical silica-based mesoporous inorganic material, it is preferable that approximately 90% by weight or more of all the particles have a particle size within a range of ±10% of the average particle size.

In the present description, the term "spherical" is not limited to describing purely spherical bodies, and also includes substantially spherical bodies in which the minimum diameter is approximately 80% or more (and preferably approximately 90% or more) of the maximum diameter. Further, in the case of a substantially spherical body, as a general rule, the particle size is reported as the average value of the minimum diameter and the maximum diameter. In the present description, the "average particle size" is defined as the number-average particle size, and may be determined by measuring the diameter of a plurality of particles from a scanning electron microscope photograph, and then calculating the average value.

The spherical silica-based mesoporous inorganic material may be obtained, for example, by using a method comprising a step of mixing a silica raw material and a surfactant within a solvent to obtain porous body precursor particles containing the surfactant introduced into the silica raw material (first step), and a step of removing the surfactant contained within the porous body precursor particles obtained in the first step to obtain a spherical silica-based porous body (second step).

There are no particular limitations on the silica raw material, provided it is capable of forming a silicon oxide (including silicon complex oxides) upon reaction, but from the viewpoints of reaction efficiency and the physical properties of the obtained silicon oxide and the like, the use of an alkoxysilane, sodium silicate, layered silicate, silica, or arbitrary mixture thereof is preferred, and among these, the use of an alkoxysilane is particularly preferred. These silica raw materials may be used individually, or may be used in combinations of two or more materials.

Examples of the surfactant include alkylammonium halides represented by a general formula (1) shown below. 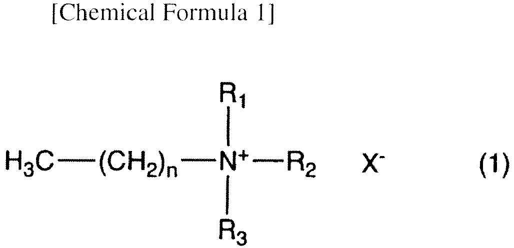 (In the formula, R₁, R₂ and R₃ represent identical or different alkyl groups of 1 to 3 carbon atoms, X represents a halogen atom, and n represents an integer of 13 to 25.)

The surfactant represented by the above general formula (1) is preferably an alkyltrimethylammonium halide having a long-chain alkyl group of 14 to 26 carbon atoms in which R₁, R₂ and R₃ are all methyl groups, and among such compounds, tetradecyltrimethylammonium halides, hexadecyltrimethylammonium halides, octadecyltrimethylammonium halides, eicosyltrimethylammonium halides, and docosyltrimethylammonium halides are more preferred. A single surfactant may be used alone, or two or more surfactants may be used in combination.

These types of surfactants may form a complex with the silica raw material within the solvent. The silica raw material within the complex may undergo reaction and may be converted to a silicon oxide, but no silicon oxide may be produced in those portions where the surfactant exists, and therefore the portions where the surfactant exist may form pores. In other words, the surfactant may be introduced into the silica raw material and functions as a template for forming pores.

Examples of solvents that may be used for mixing the silica raw material and the surfactant include mixed solvents of water and an alcohol. Examples of this type of alcohol include methanol, ethanol, isopropanol, n-propanol, ethylene glycol and glycerol, and from the viewpoint of the solubility of the silica raw material, methanol or ethanol is preferred. Further, during synthesis of porous body precursor particles by introducing the surfactant into the silica raw material, the use of a water/alcohol mixed solvent having an alcohol content of approximately 45 to approximately 80% by volume is preferred, and the use of a mixed solvent having an alcohol content of approximately 50 to approximately 70% by volume is more preferred.

In those cases where an alkoxysilane is used as the silica raw material, the porous body precursor particles may be obtained, for example, in the manner described below. First, the surfactant and a basic substance such as an aqueous solution of sodium hydroxide are added to a mixed solvent of water and an alcohol to prepare a basic solution of the surfactant, and the alkoxysilane is then added to this solution. Because the added alkoxysilane may undergo hydrolysis (or hydrolysis and condensation) within the solution, a white powder may precipitate from the solution within several seconds to several tens of minutes of the addition. In this case, the reaction temperature is preferably set to approximately 0°C to approximately 80°C, and more preferably approximately 10°C to approximately 40°C. Furthermore, the solution is preferably stirred.

Following separation of the precipitate, the solutions may be stirred at approximately 0°C to approximately 80°C (and preferably approximately 10°C to approximately 40°C) for approximately one hour to approximately 10 days to allow the reaction of the silica raw material to proceed. Following completion of this stirring, the mixture may be left to stand overnight if necessary to allow the system to stabilize, and the obtained precipitate may then be filtered and washed as necessary to obtain the porous body precursor particles.

Furthermore, in those cases where a silica raw material other than an alkoxysilane (such as a sodium silicate, layered silicate or silica) is used as the silica raw material, the silica raw material may be added to a mixed solvent of water and an alcohol containing the surfactant, and a basic substance such as an aqueous solution of sodium hydroxide may be added in an amount that is substantially equimolar with the silicon atoms within the silica raw material to prepare a uniform solution. Subsequently, porous body precursor particles can be prepared by using a method in which a dilute acid solution is added in an amount that is equivalent to approximately 1/2 to approximately 3/4 the amount of moles of silicon atoms within the silica raw material.

Examples of the method used for removing the surfactant in the second step include calcination methods, organic solvent treatment methods and ion exchange methods and the like.

In a calcination method, the porous body precursor particles may be heated at a temperature of approximately 300 to approximately 1,000°C, and preferably a temperature of approximately 400 to approximately 700°C. A heating time of approximately 30 minutes may be sufficient, but in order to ensure complete removal of the surfactant, heating is preferably performed for one hour or longer. Further, the calcination may be performed in air, but because a large amount of combustion gases is produced, an inert gas such as nitrogen may be introduced during the calcination. Further, in the case of an organic solvent treatment, the porous precursor particles may be immersed in a good solvent that exhibits a high degree of solubility of the surfactant being used, thereby extracting the surfactant. In an ion exchange method, the porous precursor particles may be immersed in an acidic solution (such as ethanol containing a small amount of hydrochloric acid) and then stirred under heating at approximately 50 to approximately 70°C. This may cause the surfactant that exists within the pores of the porous body precursor particles to undergo ion exchange with hydrogen ions. As a result of this ion exchange treatment, hydrogen ions may be retained within the pores, but the ionic radius of a hydrogen ion may be sufficiently small to cause no pore blockage problems.

The silica-based mesoporous inorganic material may be prepared, for example, using a silica source as a raw material, with the surfactant acting as a mold, and may have a highly cross-linked network structure based on an -Si-O- framework in which silicon atoms are bonded together via oxygen atoms. This type of silica-based material may be any material comprising silicon atoms and oxygen atoms as the main components, and may be a material in which at least a portion of the silicon atoms form carbon-silicon bonds with organic groups at two or more locations. Examples of these organic groups include divalent or higher organic groups in which two or more hydrogen atoms have been removed from a hydrocarbon such as an alkane, alkene, alkyne, benzene or cycloalkane or the like, although this is not an exhaustive list, and the organic group may also include an amide group, amino group, imino group, mercapto group, sulfone group, carboxyl group, ether group, acyl group or vinyl group or the like.

Representative examples of mesoporous inorganic materials besides MMSS include folded sheet mesoporous (FSM) materials (see JP 2004-051573 A) and the like.

Examples of this type of mesoporous inorganic material include, for example, mesoporous materials containing a divalent or higher organic group having one or more carbon atoms, two or more metal atoms bonded to the same carbon atom or different carbon atoms within the divalent or higher organic group, one or more oxygen atoms bonded to each of the metal atoms, and one or more characteristic groups having one or more carbon atoms that are bonded to each of the metal atoms via an aforementioned oxygen atom, wherein among the characteristic groups contained within the framework, at least those characteristic groups that exist on the inner wall surfaces of the plurality of pores are either further bonded to an ion exchange group having a cation exchange capacity, or the characteristic groups are substituted with an ion exchange groups having a cation exchange capacity.

By adopting the framework described above, the mesoporous inorganic material is able to adsorb and immobilize the target substance within the pore at a specific adsorption position inside the pore, namely, at an "organic group" site that exhibits excellent affinity for organic compounds. Further, by altering the variety of this organic group, the size of this adsorption position (adsorption site) and the adsorption power can be altered in accordance with the variety and size and the like of the target substance.

The framework described above preferably comprises at least one structural unit represented by a general formula (2) shown below. 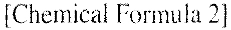 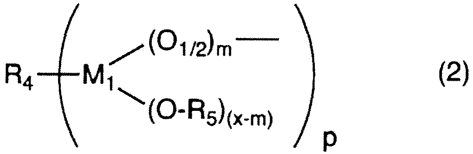 (In the formula (2), R₄ represents a divalent or higher organic group having one or more carbon atoms, M₁ represents a metal atom, R₅ represents a hydrocarbon group, x represents an integer equal to the valency of M₁ minus one, m represents an integer of not less than 1 and not more than x, and p represents an integer of 2 or greater. The carbon atom within R₄ to which the M₁ atoms are bonded may be the same carbon atom or different carbon atoms, and an ion exchange group having a cation exchange capacity is bonded to at least those R₅ groups that exist on the inner wall surfaces of the aforementioned plurality of pores. Alternatively, at least those R₅ groups that exist on the inner wall surfaces of the aforementioned plurality of pores may be substituted with an ion exchange group having a cation exchange capacity.)

Furthermore, the framework described above preferably comprises at least one structural unit represented by a general formula (3) shown below. 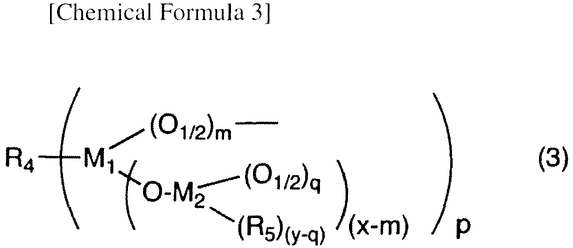 (In the formula (3), R₄, M₁, R₅, x, m and p are the same as defined above for R₄, M₁, R₅, x, m and p respectively in the formula (2), M₂ represents a metal atom, y represents an integer equal to the valency of M₂ minus one, and q represents an integer of not less than I and not more than y. M₁ and M₂ may be the same or different, the carbon atom within R₄ to which the M₁ atoms are bonded may be the same carbon atom or different carbon atoms, the carbon atom within R₅ to which the M₂ atoms are bonded may he the same carbon atom or different carbon atoms, and an ion exchange group having a cation exchange capacity is bonded to at least those R₅ groups that exist on the inner wall surfaces of the aforementioned plurality of pores.)

Examples of the organic group (R₄) include groups having one or more carbon atoms, and having a valency that is divalent or higher in order to bond the two or more metal atoms. Examples of this type of organic group include divalent or higher organic groups generated by eliminating two or more hydrogen atoms from a hydrocarbon such as an alkane, alkene, alkyne, benzene or cycloalkane. The mesoporous material may comprise one type or two or more types of the above organic group. In order to obtain a mesoporous material having a high degree of cross-linking and a high level of crystallinity, the valency of the organic group is preferably divalent. The divalent organic group may be selected in accordance with the size and the like of the target substance, and specific examples include a methylene group, ethylene group and phenylene group.

Examples of the characteristic group and the hydrocarbon group (R₅) include alkyl groups of 1 to 10 carbon atoms, alkenyl groups of 1 to 10 carbon atoms, a phenyl group and substituted phenyl groups.

Two or more metal atoms (M₁, M₂) are bonded to the same carbon atom or different carbon atoms in the above organic group. There are no particular limitations on the variety of these metal atoms (M₁, M₂), and examples include silicon, aluminum, titanium, magnesium, zirconium, tantalum, niobium, molybdenum, cobalt, nickel, gallium, beryllium, yttrium, lanthanum, hafnium, tin, lead, vanadium and boron. Among these, silicon, aluminum and titanium are preferred as they exhibit more favorable bonding properties with the organic group and oxygen.

As is evident from the examples listed above, the "metal atom" bonded to the organic group includes not only elements that are classified as metals in the periodic table, but also Si, P, S and B. Further, the metal atoms are not only bonded to the organic group, but are also bonded to an oxygen atom to form an oxide, wherein this oxide may be a complex oxide comprising two or more different types of metal atom.

Further, a characteristic group having one or more carbon atoms may be bonded to at least one of the oxygen atoms bonded to the metal atom. In this characteristic group, at least when the characteristic group exists on the inner wall surface of a pore, one of the constituent atoms (for example, a hydrogen atom) may be removed, and a cation exchange group may be bonded thereto. Although there are no particular limitations on this type of characteristic group, provided it can be bonded in a chemical stable manner via the oxygen atom to the metal atom, a hydrocarbon group is preferred.

Examples of the ion exchange group include groups having at least a structure represented by a general formula (4) shown below.

Z-O-H (4)

(In the formula (4), Z represents a carbon atom, phosphorus atom, sulfur atom, nitrogen atom or halogen atom.)

In the present embodiment, the mesoporous inorganic material may be used in the form of a powder, or may be molded prior to use if necessary. Any molding technique may be used, but extrusion molding, tablet molding, tumbling granulation, compression molding or CIP (cold isostatic pressing) or the like is preferred. The shape of the molded product may be determined in accordance with the usage location and method, and examples include cylindrical, granular, spherical, honeycomb, uneven, and corrugated sheet shapes.

In the material for trapping a target substance according to the present embodiment, including the mesoporous inorganic material having a plurality of pores means that, for example, initial degradation products of an engine oil or the like (sludge precursors) can be trapped in the pores of the mesoporous inorganic material prior to undergoing polymerization and forming sludge, thus inhibiting the generation of sludge, and therefore degradation of the oil can be prevented. Further, compounds having a large molecular size compared with the pore size of the mesoporous inorganic material (the pore diameter is of meso-size of approximately 1 nm to approximately 50 nm, and preferably approximately 1 nm to approximately 20 nm), such as oil additives (for example, succinimides, overbased Ca sulfonates, and zinc dialkyldithiophosphate (ZnDTP)) in the case where the liquid organic compound is an engine oil, are less likely to be trapped, meaning the oil performance can be maintained.

A filter for trapping a target substance according to an embodiment of the present invention, which traps a target substance contained within a liquid organic compound or a gas, is used for trapping and removing a target substance from a liquid organic compound or a gas, and includes a filter material comprising a mesoporous inorganic material having a plurality of pores.

In the filter for trapping a target substance according to this embodiment, particles of the mesoporous inorganic material are preferably included on the surface of the filter material, for example by supporting the particles of the mesoporous inorganic material on the filter material fibers.

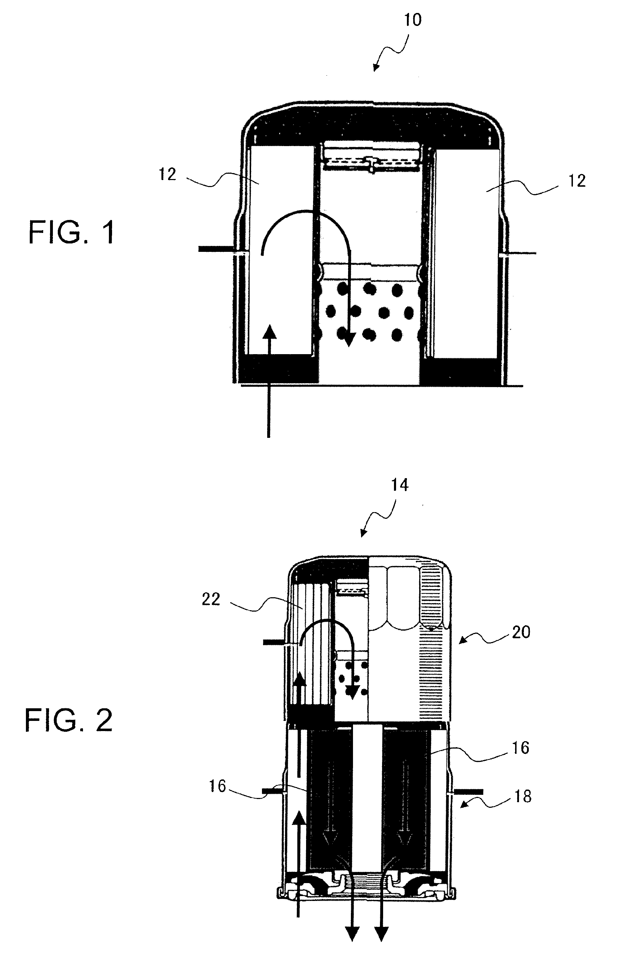

An example is an integrated mesoporous oil filter such as that illustrated in FIG. 1. The integrated mesoporous oil filter 10 illustrated in FIG. 1 comprises a mesoporous oil filter paper 12 that has been impregnated with particles of a mesoporous inorganic material such as MMSS, and this oil filter paper 12 is integrated with a conventional oil filter.

Further, in the filter for trapping a target substance according to the present embodiment, the filter material preferably comprises a molded member having a honeycomb structure that increases the contact with the liquid organic compound or gas in order to enhance the trapping and removal of the target substance, wherein at least the surfaces of the molded member that make contact with the liquid organic compound or gas comprise a mesoporous inorganic material.

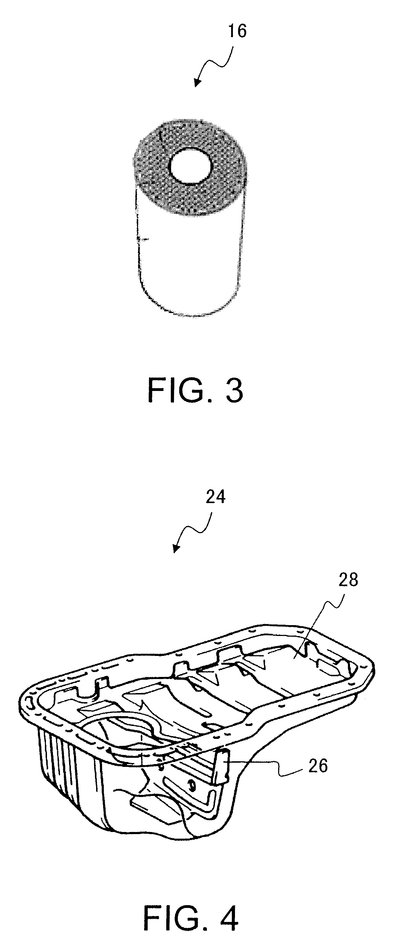

An example is a separation type mesoporous oil filter such as that illustrated in FIG. 2. The separation type mesoporous oil filter 14 of FIG. 2 comprises a mesoporous filter 18 that houses a mesoporous element 16 (see FIG. 3) comprising a honeycomb-structure molded member (a structure that reduces pressure loss during oil circulation) having a mesoporous inorganic material such as MMSS provided on at least the surfaces that contact the oil, and the mesoporous filter 18 is combined with, and fitted to, an oil filter 20 comprising a conventional oil filter paper 22 that has conventionally been fitted to an engine or the like. The honeycomb-structure mesoporous element 16 in FIG. 3 may be prepared by molding the mesoporous inorganic material into a honeycomb structure, or may be a honeycomb-structure molded member formed from a metal, ceramic or resin or the like in which the mesoporous inorganic material has been adhered or impregnated or the like to at least the surfaces that contact the oil.

In the filter for trapping a target substance within a liquid organic compound according to the present embodiment, the filter material may be a paper body, or a paper body having particles of the mesoporous inorganic material supported on the fibers of the paper body may be used as the oil filter or the like.

The filter for trapping a target substance according to the present embodiment may comprise a molded body of a mesoporous inorganic material having a plurality of pores. The molded body may be obtained, for example, by dispersing a predetermined mesoporous inorganic material on top of a membrane filter or the like, and then performing compression molding by applying a predetermined pressure with a hydraulic molding device or the like.

In this molded body, the mesoporous inorganic material may be spherical or amorphous, but is preferably amorphous from the viewpoint of mass producibility and the like. In this description, the term "amorphous" describes mesoporous inorganic materials other than spherical materials.

In this molded body, from the viewpoint of the trapping effect and the like, the average particle size of the amorphous mesoporous inorganic material is preferably within a range from approximately 0.2 to approximately 100 µm, more preferably within a range from approximately 1.5 to approximately 100 µm, still more preferably within a range from approximately 1.5 to approximately 70 µm, and particularly preferably within a range from approximately 1.5 to approximately 20 µm. From the viewpoint of reducing pressure loss and the like during filtering, the average particle size of the mesoporous inorganic material is preferably within a range from approximately 5 to approximately 100 µm. A molded body that combines a favorable trapping effect with reduced pressure loss preferably has an average particle size within a range from approximately 5 to approximately 70 µm.

A container for a liquid organic compound according to an embodiment of the present invention comprises a containment unit that contains the liquid organic compound, wherein at least a portion of the inner surface of the containment unit comprises a mesoporous inorganic material having a plurality of pores.

An example is an inner surface-coated oil pan having a mesoporous inorganic material applied to the inner surface such as that illustrated in FIG. 4. The inner surface-coated oil pan 24 of FIG. 4 has a mesoporous inorganic material layer 28 provided on the inner surface of an oil pan 26 by a method in which a mixed liquid containing a resin-based binder or an inorganic binder and mesoporous inorganic material particles is applied to the inner surface of the oil pan.

Examples of the resin-based binder include epoxy resins, acrylic resins, urethane resins, phenolic resins and cyanoacrylates. Examples of the inorganic binder include alumina-based binders and silica-alumina-based binders.

Specific examples of the container for a liquid organic compound, other than the oil pan described above, include special-purpose tanks and pipe units and the like.

An engine oil according to an embodiment of the present invention comprises a spherical mesoporous inorganic material having a plurality of pores and an average particle size of not more than 1 µm dispersed therein. By dispersing the mesoporous inorganic material within the engine oil, substances to be trapped such as sludge and sludge precursors can be selectively trapped.

### EXAMPLES

A more detailed description of the present invention is presented below based on a series of examples and comparative examples, but the present invention is in no way limited by the following examples.

### <Example 1 and Comparative Example 1>

A method of trapping initial degradation products prior to the initial degradation products polymerizing to form a sludge, thereby inhibiting oil degradation, was investigated as a technique for removing degradation products within the field of oil degradation inhibition. Using a mesoporous inorganic material as the trapping material for the degradation products, the oil degradation inhibitory effect was investigated.

### [Porous Body Test Sample]

Monodispersed mesoporous silica spheres (MMSS), which were synthesized so as to obtain sub-micron order spherical particles having a plurality of pores for which the central pore diameter was approximately I to approximately 20 nm, were used as the mesoporous inorganic material. The specific synthesis method used is described below.

### (Mesoporous Silica Synthesis Example)

35.2 g of hexadecyltrimethylammonium chloride (C₁₆TMAC1) was dissolved in a mixed solvent containing 4,126 g of pure water and 3,810 g of methanol (MeOH), and the solution was stirred with the temperature held at 25°C. Subsequently, 34.2 g of 1 M NaOH, and 26.4 g of tetramethoxysilane (TMOS) diluted with 30 g of MeOH were added to the solution. The resulting mixture was stirred for approximately 8 hours and then left to stand overnight, the operations of filtration and re-dispersion in pure water were then repeated twice, and the product was then dried at 45°C, yielding 19.25 g of a white powder. This white powder was calcined in air at 550°C for 6 hours, yielding 9.25 g of a mesoporous silica.

### (Amino Group-Copolymerized Mesoporous Silica Synthesis Example)

35.2 g of hexadecyltrimethylammonium chloride (C₁₆TMACl) was dissolved in a mixed solvent containing 4,126 g of pure water and 3,810 g of methanol (MeOH), and the solution was stirred with the temperature held at 25°C. Subsequently, 34.2 g of 1 M NaOH was added to the solution, and a mixture containing 25.74 g of tetramethoxysilane (TMOS) and 0.78 g of 3-aminopropyl-triethoxysilane (APTES) (equivalent molar ratio of TMOS:APTES=97.5:2.5) diluted with 30 g of MeOH was then added. The resulting mixture was stirred for approximately 8 hours and then left to stand overnight, the operations of filtration and re-dispersion in pure water were then repeated twice, and the product was then dried at 45°C, yielding 18.30 g of a white powder. Subsequently, the method described below was used to extract the surfactant from the white powder. Namely, 3 g of the above white powder was mixed with 300 mL of ethanol and 3 mL of concentrated hydrochloric acid, and following treatment for 12 hours at 60°C, the operations of filtration and dispersion in ethanol were repeated three times, yielding a mesoporous silica that had been copolymerized with amino groups. In this state, the amino groups exist in the form of a hydrochloride. 1.75 g of this copolymerized mesoporous silica was dispersed in a mixed solvent containing 5 mL of 28% by weight ammonia water and 95 mL of methanol, and the dispersion was stirred at room temperature for 8 hours. Subsequently, the dispersion was filtered and washed with methanol, and then dried under vacuum for 12 hours at 150°C, yielding 1.55 g of an amino group-copolymerized mesoporous silica.

### [Testing]

Using an NOx-degraded oil, filtration tests were performed using MMSS and a comparative material, and the oil components following filtering were analyzed by Fourier transform infrared spectroscopy (FT-IR).

### [NOx-degraded Oil Test Sample]

Various additives (an anti-wear agent, detergent and dispersant) were added to a base oil to prepare a prototype engine oil. This prototype engine oil was degraded by bubbling NO gas through the oil to prepare an NOx-degraded oil test sample. The NOx bubbling conditions are shown in Table 1.

**[Table 1]**

| NOx bubbling conditions | |
|---|---|
| Moisture addition | None (only the small amount of moisture contained in the carrier gas) |
| NOx concentration | NO gas 400 ppm |
| Oil temperature | 100 C |
| Oil volume | 100 mL |
| Bubbling time | 72 hours continuous |

### [Prototype engine Oil]

To a base oil were added 1 mass % of ZnDTP as an anti-wear agent, 2 mass % of an overbased Ca sulfonate as a detergent , and 6 mass % of a succinimide as a dispersant.

### (Base Oil)

A group III base oil: Yubase 4 (SK Corporation), which is a hydrocracked and isomerized mineral oil having a kinematic viscosity of 19.7 mm²/s (40°C) and 4.2 mm²/s (100°C), and S<10 ppm was used as the base oil.

### (additives)

ZnDTP: LZ1371 (The Lubrizol Corporation), secondary type
Overbased Ca sulfonate: LZ6477C (The Lubrizol Corporation), total base number (TBN)=300 mgKOH/g
Succinimide: LZ6412 (The Lubrizol Corporation)

### [Filtration Method]

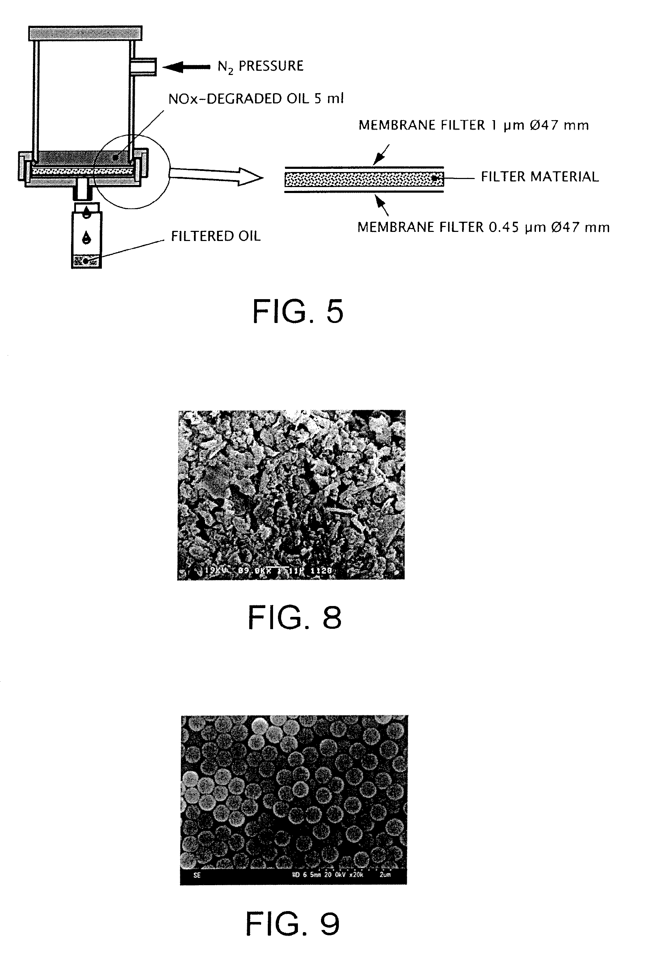

Filtration of the NOx-degraded oil was performed using the filtration apparatus illustrated in FIG. 5. A weight of approximately 1 g of the filter material was dispersed on top of a membrane filter (Poreflon FP045, manufactured by Sumitomo Electric Industries, Ltd., pore size: 0.45 µm), and a hydraulic molding device was then used to perform compression molding at 4 MPa. Following molding of the filter material, a membrane filter (Poreflon FP100, manufactured by Sumitomo Electric Industries, Ltd., pore size: 1 µm) was placed on top of the filter material, the filter structure was mounted in the filtration apparatus, and 5 mL of the NOx-degraded oil was injected into the apparatus. The filtration using the filter material was performed under a pressure of 20 kPa provided by N₂ gas. Filtration using only the membrane filter was performed at atmospheric pressure.

### [Filter Material Test Samples]

Details of the filter materials used for evaluation are shown below.
(1) Membrane filter with no filter material (membrane filter pore size: 0.45 µm only)
(2) MMSS. average particle size: 610 nm, central pore diameter: 2.4 nm
(3) Spherical SiO₂, Admatechs SO-E2, average particle size: 600 nm, no pores (comparative example 1)

### [Analysis of Oil Components]

The components within the NOx-degraded oil test sample and the filtered oil were analyzes by Fourier transform infrared spectroscopy (FT-IR). The apparatus specifications and analysis conditions are shown below.
Fourier transform infrared spectroscopy apparatus: Avatar 360, Thermo Nicolet Japan Inc.
Cell used: JASCO fixed cell for liquids KBr, t=0.1 mm
Cumulated number: 32

### [Results]

### (NOx-degraded oil test sample)

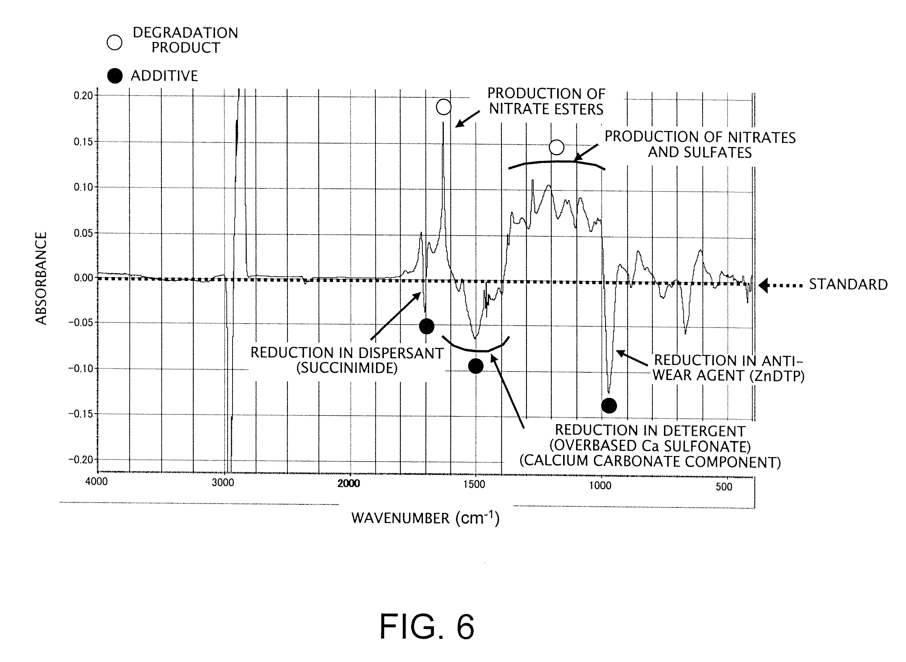

A difference spectrum for the NOx-degraded oil relative to a new oil of prototype engine oil is illustrated in FIG. 6. The NOx-degraded oil test sample contained nitrate esters, nitrates and sulfates as initial degradation products. On the other hand, it is evident that the effective additives, namely the succinimide, overbased Ca sulfonate and ZnDTP, had decreased in quantity or degenerated.

### (Appearance of Filtered Oils)

The NOx-degraded oil test sample and the filtered NOx-degraded oils were inspected visually. Only the oil that had been filtered through MMSS showed a marked change in color, and was of a similar color to the new oil of prototype engine oil.

### (Filtered Oil Components)

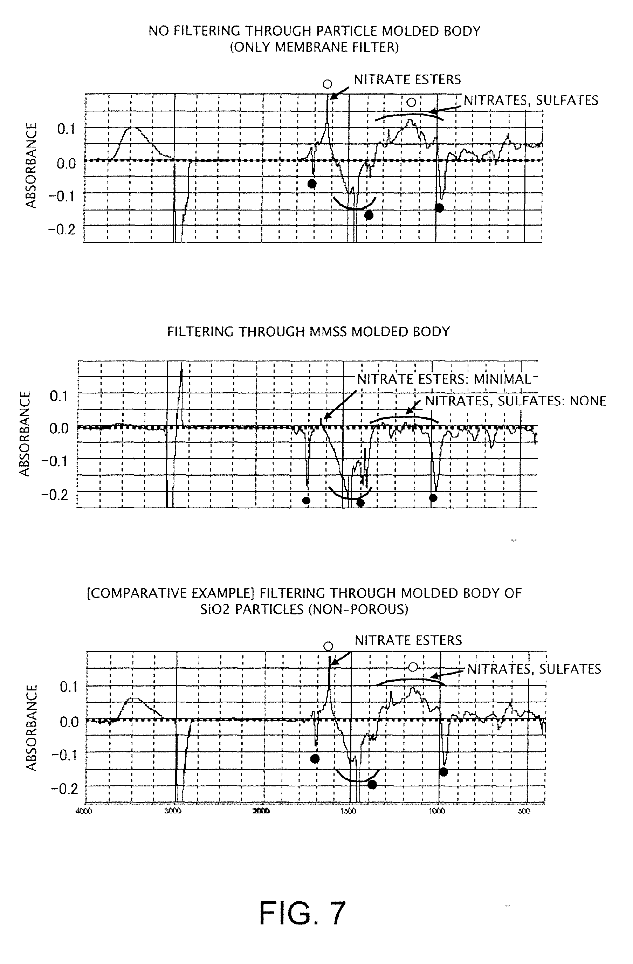

Difference spectra for the NOx-degraded oil test samples filtered through each of the filter materials relative to a new oil of prototype engine oil are illustrated in FIG. 7. The oil that had been filtered through MMSS had reduced amounts of the nitrate esters, nitrates and sulfates that represent the initial degradation products, and it was evident that the degradation products had been trapped. With the SiO₂ of the comparative material, no reduction in the amounts of the initial degradation products was observed, which was similar to the result observed for filtration using only the membrane filter. Based on these results, it was evident that MMSS was able to trap the initial degradation products, and was effective in inhibiting oil degradation.

### <Examples 2 to 15, Comparative Examples 2 to 5>

### [Porous Body Test Sample]

An amorphous mesoporous silica was used as a mesoporous inorganic material having a plurality of pores with a central pore diameter of 1.8 to 10.6 nm. Further, a spherical mesoporous silica having a particle size of 610 nm and a pore diameter of 2.4 nm was also used. SEM photographs of the amorphous mesoporous silica and the spherical mesoporous silica that were used are shown in FIG. 8 and FIG. 9 respectively.

### [Testing]

Using an NOx-degraded oil, filtration tests were performed using the amorphous mesoporous silica, the spherical mesoporous silica and comparative materials. The oil components following filtering were analyzed by Fourier transform infrared spectroscopy (FT-IR) to investigate the degradation product-trapping effect.

### [NOx-degraded Oil Test Sample]

A commercially available gasoline engine oil (Toyota Castle SM/5W-30) was degraded by bubbling NO₂ gas through the oil to prepare an NOx-degraded oil that simulated an oil that had been used for an extended period in a gasoline engine, and this oil was then tested. The NOx bubbling conditions are shown in Table 2.

**[Table 2]**

| NOx bubbling conditions | |
|---|---|
| Test oil | SM/5W-30 (300 mL) |
| NO₂ concentration | 1,000 ppm |
| Air flow rate | 205 mL/min (of which. 165 mL/min for humidification) |
| Moisture | 0.5 mL/hr |
| Total gas flow rate | 283 mL/min |
| Oil temperature | 130 C |
| Bubbling time | 40 hours |

### [Filtration Method]

Filtration of the NOx-degraded oil was performed using the filtration apparatus illustrated in FIG. 5. A weight of approximately 0.8 g of the particulate filter material was dispersed on top of a membrane filter (Poreflon FP045, manufactured by Sumitomo Electric Industries, Ltd., pore size: 0.45 µm), and a hydraulic molding device was then used to perform compression molding at 4 MPa. Further, a paper body having the amorphous mesoporous silica supported thereon was cut to 047 mm to obtain an amount of the amorphous mesoporous silica of approximately 0.8 g, and the cut paper body was overlaid on top of a membrane filter (pore size: 0.45 µm). A membrane filter (Poreflon FP100, manufactured by Sumitomo Electric Industries. Ltd., pore size: 1 µm) was placed on top of each filter material, the filter structure was mounted in the filtration apparatus, and 3 mL of the NOx-degraded oil was injected into the apparatus. The filtration was performed under N₂ gas pressure of 20. 50, 100, 150 or 200 kPa for a period of two hours each.

### [Filter Material Test Samples]

Details of the amorphous mesoporous silica, the spherical mesoporous silica and the comparative porous bodies used for evaluation are shown below.
(1) Amorphous mesoporous silica particles (example 2 to 10 in Table 3)
   Amorphous mesoporous silica paper body (examples 11 and 12 in Table 3)
(2) Spherical mesoporous silica, average particle size: 610 nm, central pore diameter: 2.4 nm
   Chemical modification: none (example 13), hydrochloride treatment (example 15), amino group treatment (example 14)
(3) Zeolite: Tosoh Zeolum A-3, average particle size: not more than 150 µm, central pore diameter: 0.3 nm (comparative example 2)
(4) Diatomaceous earth: Showa Chemical Radiolite Special Flow, average particle size: 12.7 µm, central pore diameter: 300 nm (comparative example 3)
(5) Activated carbon: Norit SX2, average particle size: 20 µm, central pore diameter unknown (comparative example 4)
(6) Sepiolite: Ohmi Kogyo P-80V, average particle size and central pore diameter unknown (comparative example 5)

**[Table 3]**

| Average particle size | Central pore diameter | | | | |
|---|---|---|---|---|---|
| | 18 nm | 27 nm | 42 nm | 80 nm | 106 nm |
| 15 µm | | Example 3 | | | |
| 18 µm | | Example 4 | Example 8 | | |
| 28 µm | Example 2 | | | | |
| 29 µm | | | | Example 9 | |
| 51 µm | | | | | Example 10 |
| 55 µm | | Example 5 | | | |
| 181 µm | | Example 6 | | | |
| 402 µm | | | | | |
| 703 µm | | Example 7 | | | |
| Paper body | Example 11 | | Example 12 | | |

The hydrachloride-treated spherical mesoporous silica was synthesized using a copolymerization method in which 3-aminopropyltrimethoxysilane was used together with tetramethoxysilane as the silica source. The surfactant within the mesopores was removed by heating the product at 80°C in a mixed solvent of hydrochloric acid and ethanol. Moreover, the hydrochloric acid was removed by dispersing the hydrochloride-treated spherical mesoporous silica in a methanol solution containing ammonia water and heating at 50°C, thus obtaining the amino group-treated spherical mesoporous silica.

### [Analysis of Oil Components]

The components within the NOx-degraded oil test sample and the filtered oils were analyzed by Fourier transform infrared spectroscopy (FT-IR) in a similar manner to that described for the example 1.

### [Results]

### (NOx-degraded oil test sample)

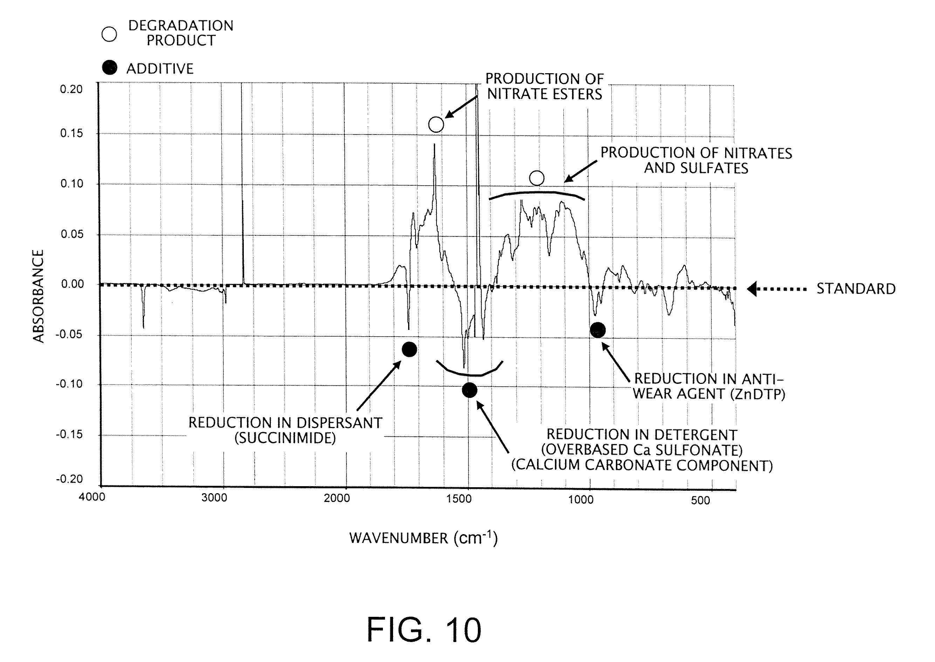

A difference spectrum for the NOx-degraded oil relative to a new oil sample is illustrated in FIG. 10. In the difference spectrum, peaks above the dashed line (the standard) are derived from components that have increased in the oil as a result of the NOx degradation test, whereas peaks below the dashed line are derived from components that have decreased. It is evident that the NOx-degraded oil test sample contained nitrate esters, nitrates and sulfates as initial degradation products. Further, it is also evident that the effective oil additives, namely the succinimide, overbased Ca sulfonate and ZnDTP, had decreased in quantity or degenerated. This NOx-degraded oil was used below for evaluating the degradation product-trapping effect.

### (Quantification of Degradation Product-Trapping Effect)

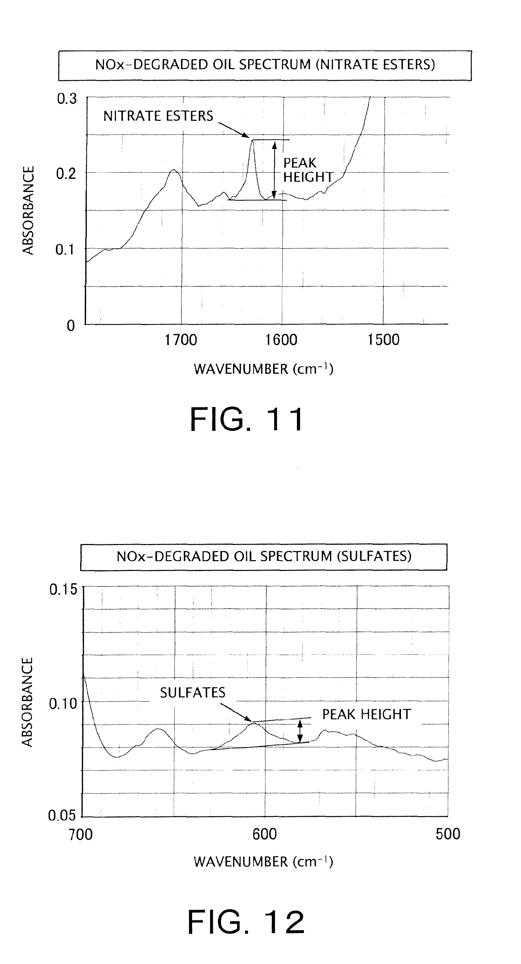

Quantification of the degradation product-trapping effect was performed by focusing on the nitrate esters (wave number: 1,630 cm ¹) and sulfates (wave number: near 610 cm ¹) that represent initial degradation products, measuring the peak heights of the nitrate ester peak and the sulfate peak for the NOx-degraded oil before and after filtration, and then evaluating the trapping efficiency based on the percentage decrease in the peak heights. Examples of the nitrate ester and sulfate spectra for the NOx-degraded oil test sample are illustrated in FIG. 11 and FIG. 12.

### (Effects of Particle Size)

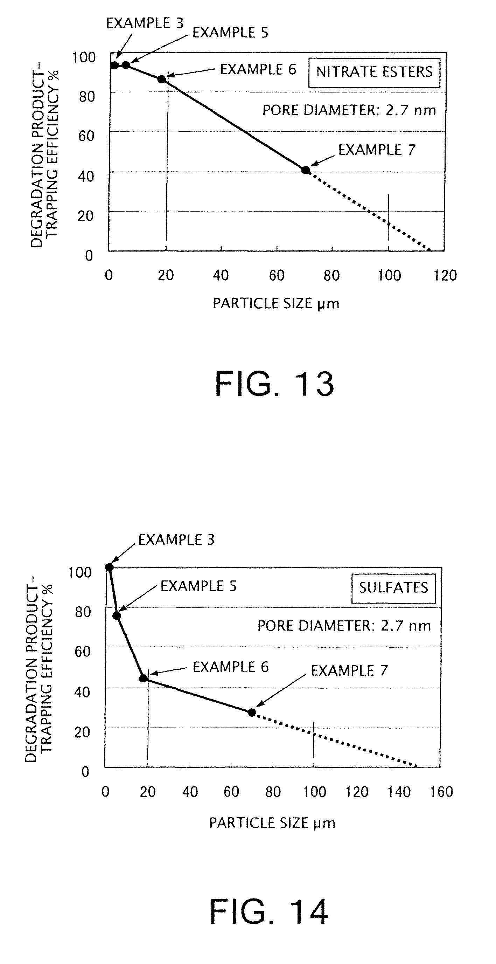

The degradation product-trapping effect achieved by the filtrations performed in example 3 and examples 5 to 7 is illustrated in FIG. 13 and FIG. 14. As a result of extrapolating the trapping efficiency from example 6 and example 7, it is speculated that for an average particle size of not more than 100 µm, a trapping efficiency of approximately 10% or greater can be achieved. Further, if FIG. 13 and FIG. 14 are viewed in combination, then it is evident that a particularly superior degradation product-trapping effect can be obtained for average particle sizes within a range from approximately 1.5 to approximately 20 µm.

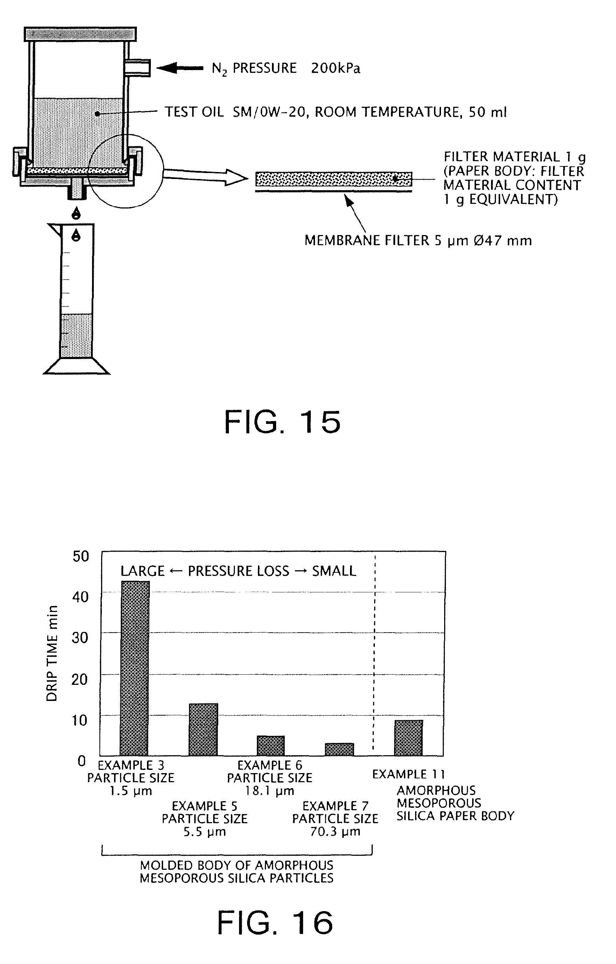

Based on the time required for filtering 50 mL of an oil test sample using the filtration apparatus, the resistance to oil flow using each of the filter materials, namely the oil pressure loss (pressure loss), was evaluated (FIG. 15). The evaluation results are illustrated in FIG. 16. By comparing the examples 3, 5, 6 and 7, it is evident that when a molded body of amorphous mesoporous silica particles is used as the filter material, a larger particle size yields reduced pressure loss. Further, it is also evident that example 11, which used an amorphous mesoporous silica paper body, also exhibited a short drip time, indicating pressure loss was able to be suppressed to a low level. Based on the above results, it can be said that for average particle sizes from approximately 5 to approximately 70 µm, degradation products can be trapped while keeping the pressure loss during oil filtration at a low level.

### (Effects of Central Pore Diameter)

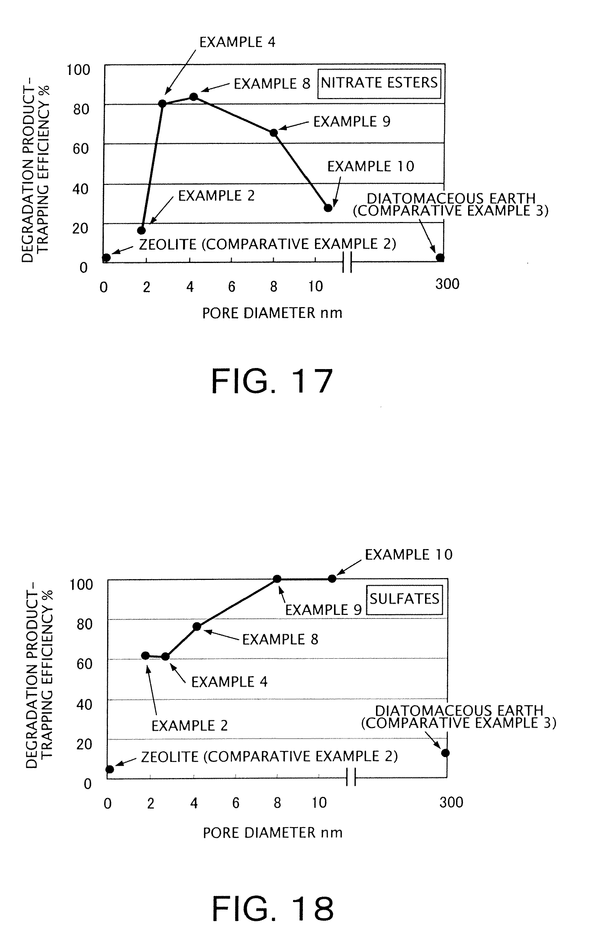

The degradation product-trapping effect of the filtrations performed in examples 2, 4, 8, 9 and 10 is illustrated in FIG. 17 and FIG. 18. It is evident that a degradation product-trapping effect was obtained when the central pore diameter was within a range from approximately 1.8 to approximately 10.6 nm. For nitrate esters, the trapping efficiency was particularly high for central pore diameters of approximately 1.8 nm to approximately 8 nm, whereas the trapping efficiency for sulfates was high for central pore diameters of approximately 1.8 nm to approximately 10.6 nm. Trapping of approximately 100% was achieved for central pore diameters of approximately 8 nm to approximately 10.6 nm. Based on the fact that the zeolite (comparative example 2: central pore diameter of 0.3 nm) and the diatomaceous earth (comparative example 3: central pore diameter of 300 nm) used as comparative materials exhibited almost no trapping effect for nitrate esters and sulfates, it was evident that the trapping effect deteriorates for central pore diameters of approximately 1.8 nm or less, and that almost no trapping effect exists if the central pore diameter is too large.

### (Effect of Porous Body Material)

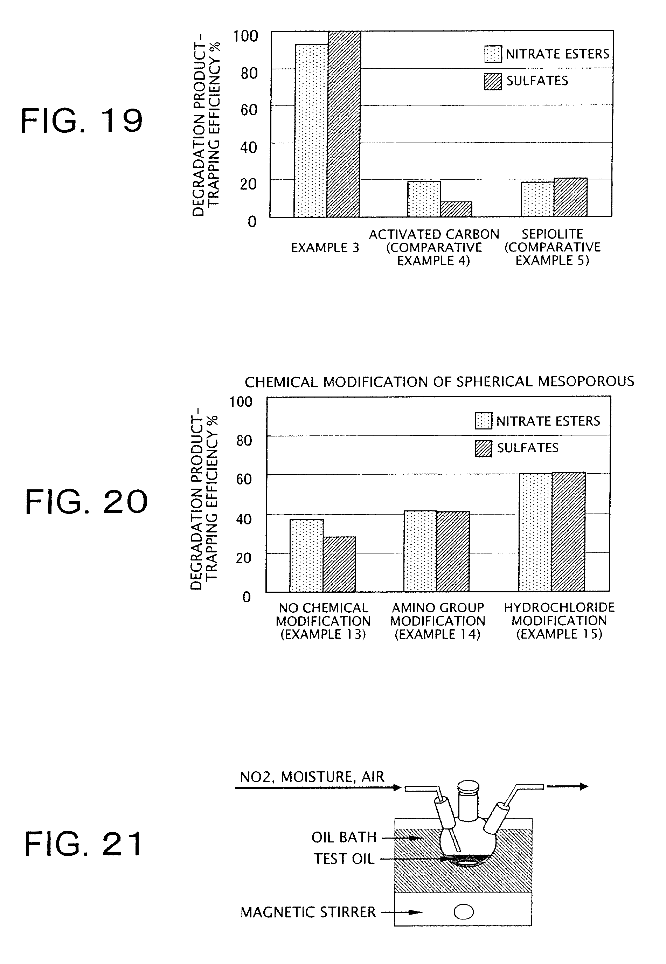

The degradation product-trapping effect achieved when a molded body of the amorphous mesoporous silica of example 3, or the activated carbon (comparative example 4: average particle size 20 µm, central pore diameter unknown) or sepiolite (comparative example 5: average particle size and central pore diameter unknown) of the comparative materials was used as the filter material is illustrated in FIG. 19. It was evident that, compared with the comparative materials, the amorphous mesoporous silica exhibited an extremely superior degradation product-trapping effect.

### (Effect of Chemical Modification of Spherical Mesoporous Silica)

The degradation product-trapping effect of spherical mesoporous silica in which the pore inner surfaces have been modified with approximately 2.5% of either amino groups or hydrochloride salts via propyl groups is illustrated in FIG. 20. It was evident that chemical modification of the spherical mesoporous silica improved the trapping efficiency of degradation products, and that the trapping efficiency achieved by hydrochloride modification was particularly high.

### (Effect of Dispersing Spherical Mesoporous Silica within Oil)

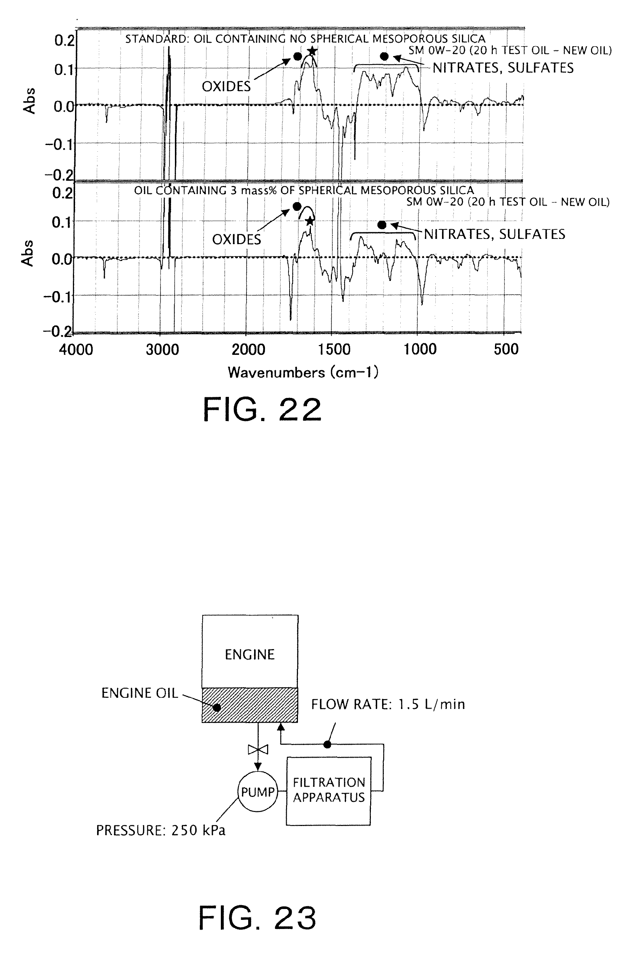

In order to confirm the oil degradation inhibitory effect obtained when a spherical mesoporous silica is dispersed within an oil, an oil degradation test apparatus illustrated in FIG. 21 was used to conduct an oil degradation test. A commercially available gasoline engine oil (Toyota Castle SM 0W-20) was used as the test oil. The test conditions are shown in Table 4. Difference spectra were determined for a new oil sample relative to either a post-test oil that contained no spherical mesoporous silica or a post-test oil containing 3 mass% of a spherical mesoporous silica that had been filtered through a filtration filter (Mini-Sarto NY25X plus, manufactured by Sartorius K.K., pore size: 0.45 µm). The results are illustrated in FIG. 22. It was evident that the oil containing the spherical mesoporous silica contained lower amounts of degradation products such as oxides, nitrates and sulfates than the oil containing no mesoporous silica, confirming that oil degradation can be inhibited by dispersing a spherical mesoporous silica within the oil.

**[Table 4]**

| Oil degradation test conditions | |
|---|---|
| Test oil | SM/0W-20 (20 g) |
| NO₂ concentration | 1.000 ppm |
| Air flow rate | 205 mL/min (of which, 165 mL/min for humidification) |
| Moisture | 0.5 mL/hr |
| Total gas flow rate | 283 mL/min |
| Oil temperature | 130°C |
| Bubbling time | 20 hours |

| | |
|---|---|
| (* 3 mass% of the spherical mesoporous silica was mixed into the oil prior to starting the test) | |

### (Evaluation of Oil Degradation Inhibition in Actual Engine)

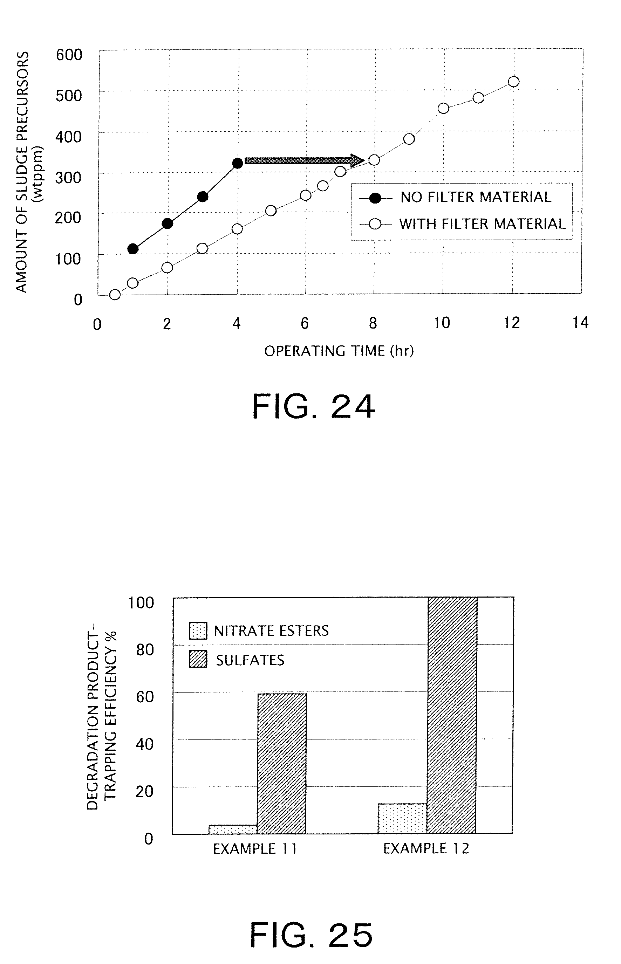

Using the amorphous mesoporous silica particles (example 7) that exhibited minimal pressure loss during oil filtering in the NOx-degraded oil filtration test as a filter material, an evaluation of the oil degradation inhibition within an actual engine was performed. The system configuration for the actual engine test is illustrated in FIG. 23, and the test conditions are shown in Table 5. The test was performed by operating the engine either with the filter material packed in the filtration apparatus (with filter material) or with no filter material (no filter material), and performing an evaluation by comparing the amount of sludge precursors (initial degradation products) produced within the oil during engine operation. Measurement of the sludge precursors within the oil was performed using an ultracentrifuge. Compared with the oil containing no filter material, the oil that was filtered through the mesoporous silica particles exhibited an approximately 50% reduction in the amount of sludge precursors after an engine operating time of 4 hours, and it is evident that oil degradation can be inhibited in an actual engine, and that the life of the oil can be extended approximately two-fold (FIG. 24).

**[Table 5]**

| Engine operating conditions | |
|---|---|
| Test engine | Straight 4-cylinder gasoline engine. |
| | displacement: 1800 cm³ |
| Engine operating conditions Engine operating conditions | Revolutions: 3,000 rpm. |
| | steady-state operation |

| Filter material | Amorphous mesoporous silica (example 7) 100 g |
|---|---|
| Test oil | Commercially available engine oil |
| | Toyota Castle SM 5W-30 5,700 cm³ |
| Pump pressure | 250 kPa |
| Circulating oil | 1.5 L/min |
| flow rate | |

### (Effect of Amorphous Mesoporous Silica Paper Body)

An amorphous mesoporous silica paper body having an amorphous mesoporous silica supported thereon was investigated, as it enables pressure loss during oil filtering to be reduced to a comparatively small value, and as a filter material, offers easier handling than a particulate molded body. FIG. 25 illustrates the trapping effect for example 11, in which an amorphous mesoporous silica with a central pore diameter of 1.8 nm was supported on a paper, and example 12, in which an amorphous mesoporous silica with a central pore diameter of 4.2 nm was supported on a paper. The example 12 exhibited a trapping efficiency of approximately 10% or more for both nitrate esters and sulfates, confirming a degradation product-trapping effect.

### (Summary of Degradation Product-Trapping Effect of Amorphous Mesoporous Silica)

The degradation product-trapping effect of amorphous mesoporous silica is illustrated in Table 6 in terms of relative evaluations, wherein the result of filtering an NOx-degraded oil through only a membrane filter (pore size: 0.45 µm) is deemed to be E.

**(Table 6)**

| Average particle size | Central pore diameter | | | | |
|---|---|---|---|---|---|
| | 1.8 nm | 2.7 nm | 4.2 nm | 8.0 nm | 10.6 nm |
| 1.5 µm | | Example 3 (A) | | | |
| 1.8 µm | | Examples 4 (B) | Example 8 (B) | | |
| 2.8 µm | Example 2 (C) | | | | |
| 2.9 µm | | | | Example 9 (B) | |
| 51 µm | | | | | Example 10 (B) |
| 55 µm | | Example 5 (B) | | | |
| 181 µm | | Example 6 (B) | | | |
| 402 µm | | | | | |
| 701 µm | | Example 7 (C) | | | |
| Paper body | Example 11 (D) | | Example 12 (B) | | |

### DESCRIPTION OF REFERENCE SIGNS

- 10: Integrated mesoporous oil filter
- 12: Mesoporous oil filter paper
- 14: Separation type mesoporous oil filter
- 16: Mesoporous element
- 18: Mesoporous filter
- 20: Oil filter
- 22: Oil filter paper
- 24: Inner surface-coated oil pan
- 26: Oil pan
- 28: Mesoporous inorganic material layer

## Claims

1. A material for trapping a target substance, which traps a target substance contained within a liquid organic compound or a gas,
the material comprising a mesoporous inorganic material having a plurality of pores.

2. The material for trapping a target substance according to claim 1, wherein
a central pore diameter of the mesoporous inorganic material is within a range from approximately 1 to approximately 20 nm.

3. The material for trapping a target substance according to claim 2, wherein
a central pore diameter of the mesoporous inorganic material is within a range from approximately 1.5 to approximately 11 nm.

4. The material for trapping a target substance according to any one of claims 1 to 3, wherein
the mesoporous inorganic material is a silica-based mesoporous inorganic material.

5. The material for trapping a target substance according to claim 4, wherein
the silica-based mesoporous inorganic material is a spherical silica-based mesoporous inorganic material having an average particle size of not more than approximately 1 µm.

6. The material for trapping a target substance according to any one of claims 1 to 5, wherein
the mesoporous inorganic material is a material that has been chemically modified with an amino group or a hydrochloride via a hydrocarbon group.

7. A filter for trapping a target substance, which traps a target substance contained within a liquid organic compound or a gas,
the filter including a filter material comprising a mesoporous inorganic material having a plurality of pores.

8. The filter for trapping a target substance according to claim 7, wherein
a central pore diameter of the mesoporous inorganic material is within a range from approximately 1 to approximately 20 nm.

9. The filter for trapping a target substance according to claim 8, wherein
a central pore diameter of the mesoporous inorganic material is within a range from approximately 1.5 to approximately 11 nm.

10. The filter for trapping a target substance according to any one of claims 7 to 9, wherein
a surface of the filter material comprises particles of the mesoporous inorganic material.

11. The filter for trapping a target substance according to claim 10, wherein
the filter material is a paper body.

12. The filter for trapping a target substance according to any one of claims 7 to 9, wherein
the filter material comprises a molded member having a honeycomb structure in which at least a surface of the molded member that makes contact with the liquid organic compound comprises the mesoporous inorganic material.

13. A filter for trapping a target substance, which traps a target substance contained within a liquid organic compound or a gas,
the filter comprising a molded body of a mesoporous inorganic material having a plurality of pores.

14. The filter for trapping a target substance according to claim 13, wherein
the mesoporous inorganic material is amorphous, and has an average particle size within a range from approximately 0.2 to approximately 100 µm.

15. The filter for trapping a target substance according to any one of claims 7 to 14, wherein
the mesoporous inorganic material is a material that has been chemically modified with an amino group or a hydrochloride via a hydrocarbon group.

16. A container for a liquid organic compound comprising a containment unit that contains the liquid organic compound, wherein
at least a portion of an inner surface of the containment unit comprises a mesoporous inorganic material having a plurality of pores.

17. The container for a liquid organic compound according to claim 16, wherein
the mesoporous inorganic material is a material that has been chemically modified with an amino group or a hydrochloride via a hydrocarbon group.

18. An engine oil, comprising a spherical mesoporous inorganic material having a plurality of pores and an average particle size of not more than approximately 1 µm dispersed therein.

19. The engine oil according to claim 18, wherein
the spherical mesoporous inorganic material is a material that has been chemically modified with an amino group or a hydrochloride via a hydrocarbon group.
